# EUROPEAN PATENT APPLICATION

(11) **EP 3 789 211 A1**
(43) Date of publication of application: **10.03.2021**
(21) Application number: 20192958.5
(22) Date of filing: 26.08.2020
(51) Int. Cl.: B60C 7/14, B60C 7/18

(54) **NON-PNEUMATIC TIRE**

(30) Priority: 06.09.2019 JP 2019162990
(71) Applicant: Toyo Tire Corporation, Itami-shi, Hyogo 664-0847 (JP)
(72) Inventor: TSUJI, Noriyuki, Hyogo, 664-0847 (JP)
(74) Representative: Sajda, Wolf E.

(57) **Abstract**

A non-pneumatic tire (T) includes: an inner annular portion (1); an outer annular portion (2) provided concentrically on an outer side of the inner annular portion (1); a plurality of coupling portions (3, 31, 32) which couple the inner annular portion (1) and the outer annular portion (2) to each other and are provided independently of one another in a tire circumferential direction (CD); at least one annular overall reinforcing layer (4) embedded entirely in the outer annular portion (2) in a tire width direction (WD); and at least one annular partial reinforcing layer (5, 51, 52) embedded only in a part of the outer annular portion (2) in the tire width direction (WD), wherein, when viewed from the tire circumferential direction (CD), the partial reinforcing layer (5, 51, 52) overlaps, in a tire radial direction (RD), each of outer connecting portions (3d, 31d, 32d) where the plurality of coupling portions (3, 31, 32) are connected to the outer annular portion (2).

## Description

### BACKGROUND OF THE INVENTION

### Field of the Invention

The present invention relates to a non-pneumatic tire.

### Description of the Related Art

As a conventional non-pneumatic tire, for example, Patent Document 1 discloses a non-pneumatic tire including: an inner annular portion; an outer annular portion provided concentrically on an outer side of the inner annular portion; and a plurality of coupling portions which couple the inner annular portion and the outer annular portion to each other and are provided independently of one another in a tire circumferential direction.

Each of the coupling portions includes an outer connecting portion that connects to the outer annular portion. In this outer connecting portion, a ground contact pressure against a road surface is higher than that in portions other than the outer connecting portion, and the ground contact pressure in a ground-contacting surface becomes non-uniform, and accordingly, steering stability is degraded, and irregular wear occurs.

### Prior Art Document

### Patent Document

Patent Document 1: JP 2015-39 986 A

### SUMMARY OF THE INVENTION

In this connection, it is an object of the present invention to provide a non-pneumatic tire capable of suppressing the ground contact pressure in the ground-contacting surface from becoming non-uniform.

A non-pneumatic tire of the present invention includes: an inner annular portion; an outer annular portion provided concentrically on an outer side of the inner annular portion; a plurality of coupling portions which couple the inner annular portion and the outer annular portion to each other and are provided independently of one another in a tire circumferential direction; at least one annular overall reinforcing layer embedded entirely in the outer annular portion in a tire width direction; and at least one annular partial reinforcing layer embedded only in a part of the outer annular portion in the tire width direction,
wherein, when viewed from the tire circumferential direction, the partial reinforcing layer overlaps, in a tire radial direction, each of outer connecting portions where the plurality of coupling portions are connected to the outer annular portion.

According to the non-pneumatic tire of the present invention, the respective outer connecting portions where the plurality of coupling portions are connected to the outer annular portion are reinforced by the partial reinforcing layer, whereby the ground contact pressure at the outer connecting portions can be reduced, and the ground contact pressure in the ground-contacting surface can be suppressed from becoming non-uniform.

### BRIEF DESCRIPTION OF THE DRAWINGS

- FIG. 1: is a front view showing an example of a non-pneumatic tire of the present invention;
- FIG. 2: is a cross-sectional view taken along a line A-A of the non-pneumatic tire of FIG. 1;
- FIG. 3A: is a cross-sectional view of a non-pneumatic tire according to another embodiment;
- FIG. 3B: is a cross-sectional view of a non-pneumatic tire according to another embodiment;
- FIG. 3C: is a cross-sectional view of a non-pneumatic tire according to another embodiment;
- FIG. 3D: is a cross-sectional view of a non-pneumatic tire according to another embodiment;
- FIG. 3E: is a cross-sectional view of a non-pneumatic tire according to another embodiment;
- FIG. 3F: is a cross-sectional view of a non-pneumatic tire according to another embodiment;
- FIG. 3G: is a cross-sectional view of a non-pneumatic tire according to another embodiment;
- FIG. 3H: is a cross-sectional view of a non-pneumatic tire according to another embodiment;
- FIG. 4A: is a cross-sectional view of a non-pneumatic tire according to another embodiment;
- FIG. 4B: is a cross-sectional view of a non-pneumatic tire according to another embodiment; and
- FIG. 4C: is a cross-sectional view of a non-pneumatic tire according to another embodiment.

### DETAILED DESCRIPTION OF THE PREFERRED EMBODIMENTS

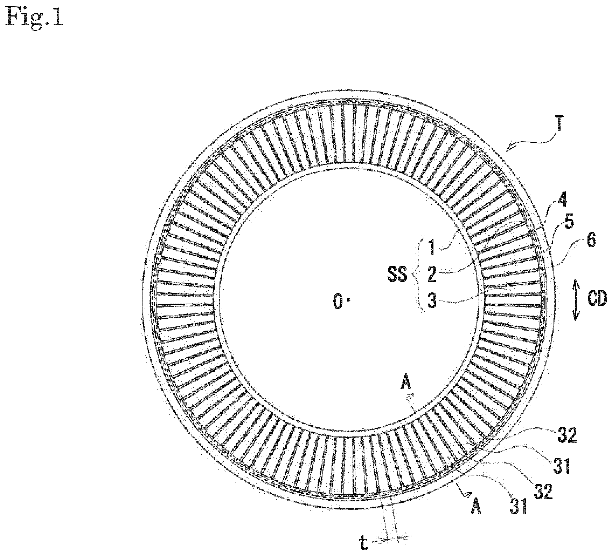

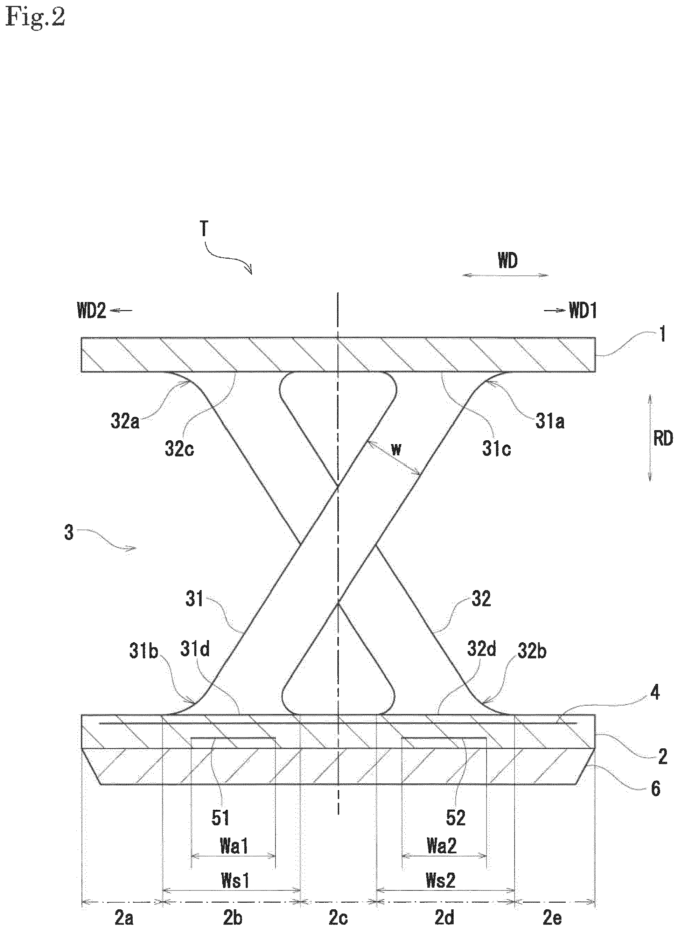

Hereinafter, an embodiment of a non-pneumatic tire will be described with reference to the drawings. FIG. 1 is a front view showing an example of a non-pneumatic tire T. FIG. 2 is a cross-sectional view taken along a line A-A of FIG. 1. Here, reference symbol O denotes an axis.

The non-pneumatic tire T includes a support structure SS for supporting a load from a vehicle. The non-pneumatic tire T of the present invention just needs to include such a support structure SS as described above. A member corresponding to a tread, a reinforcing layer, members for accommodation to an axle and a rim, or the like may be provided on an outer side (outer circumference side) and an inner side (inner circumference side) of the support structure SS.

In this embodiment, as shown in FIG. 1, there is shown an example in which a tread 6 is provided outside the support structure SS. The tread 6 is made of, for example, rubber, resin, or the like as in a conventional pneumatic tire, and may include a pattern (groove) on an outer circumferential surface thereof as in a conventional pneumatic tire.

As shown in the front view of FIG. 1, in the non-pneumatic tire T of this embodiment, the support structure SS includes: an inner annular portion 1; an outer annular portion 2 provided concentrically on an outer side of the inner annular portion 1; and a plurality of coupling portions 3 which couple the inner annular portion 1 and the outer annular portion 2 to each other and are provided independently of one another in a tire circumferential direction CD.

The support structure SS in the present invention is formed of an elastic material. From a viewpoint of enabling integral molding at the time of manufacturing the support structure SS, it is preferable that the inner annular portion 1, the outer annular portion 2, and the coupling portion 3 be basically made of the same material except a reinforcing structure.

Moreover, for example, as a base material of the support structure SS, there may be adopted a thermoplastic elastomer such as polyester elastomer, a crosslinked rubber such as natural rubber, or other resins (for example, a thermoplastic resin such as polyethylene resin, and a thermosetting resin such as polyurethane resin). Furthermore, for example, a reinforcing material such as a fiber or a metal cord may be embedded inside the base material.

From a viewpoint of improving uniformity, it is preferable that the inner annular portion 1 have a cylindrical shape with a constant thickness. Moreover, on an inner circumferential surface of the inner annular portion 1, it is preferable to provide irregularities and the like for maintaining fitting property in order to mount the non-pneumatic tire T to the axle and the rim.

Note that, though the thickness of the inner annular portion 1 is not particularly limited, the thickness is appropriately set from viewpoints of reducing weight and improving durability while sufficiently transmitting force to the coupling portion 3.

Although the inner diameter of the inner annular portion 1 is not particularly limited, the inner diameter is appropriately determined according to dimensions of the rim and the axle on which the non-pneumatic tire T is to be mounted, and the like. Although the width of the inner annular portion 1 in a tire width direction is not particularly limited, the width is appropriately determined depending on a purpose, a length of the axle, and the like.

From the viewpoint of improving the uniformity, it is preferable that the outer annular portion 2 have a cylindrical shape with a constant thickness. Note that, though the thickness of the outer annular portion 2 is not particularly limited, the thickness is appropriately set from the viewpoints of reducing the weight and improving the durability while sufficiently transmitting force from the coupling portion 3.

Although the inner diameter of the outer annular portion 2 is not particularly limited, the inner diameter is appropriately determined depending on the purpose and the like. Moreover, though the width of the outer annular portion 2 in the tire width direction is not particularly limited, the width is appropriately determined depending on the purpose and the like. Note that, preferably, the width of the outer annular portion 2 is the same as the width of the inner annular portion 1.

In the outer annular portion 2, at least one annular overall reinforcing layer 4 is embedded entirely in the outer annular portion 2 in the tire width direction WD. In this embodiment, one overall reinforcing layer 4 is provided. Note that the overall reinforcing layer 4 just needs to be disposed in substantially the whole of the outer annular portion 2 in the tire width direction WD, and does not need to completely reach both ends of the outer annular portion 2 in the tire width direction WD as shown in FIG. 2.

The overall reinforcing layer 4 includes at least reinforcing fibers arrayed in a tire circumferential direction CD. Moreover, the overall reinforcing layer 4 may further include reinforcing fibers arrayed in the tire width direction WD, and may include a woven fabric composed of reinforcing fibers arrayed in the tire circumferential direction CD and reinforcing fibers arrayed in the tire width direction WD.

Moreover, in the outer annular portion 2, annular partial reinforcing layers 5 are embedded only in a part of the outer annular portion 2 in the tire width direction WD. The partial reinforcing layers 5 are disposed outside the overall reinforcing layer 4 in a tire radial direction RD. In the example of FIG. 2, partial reinforcing layers 51 and 52 are provided side by side in the tire width direction WD.

The partial reinforcing layers 5 are composed of reinforcing fibers arrayed in a direction inclined by 0° to 45° with respect to the tire circumferential direction CD. The partial reinforcing layers 5 are preferably composed of reinforcing fibers arrayed in a direction inclined by 0° to 30° with respect to the tire circumferential direction CD. The partial reinforcing layers 5 may be composed of two layers of reinforcing fibers arrayed in directions inclined to opposite sides to each other with respect to the tire circumferential direction CD.

The coupling portions 3 couple the inner annular portion 1 and the outer annular portion 2 to each other. A plurality of the coupling portions 3 are provided so as to be independent of one another in the tire circumferential direction CD by placing appropriate intervals between the coupling portions 3.

Although the number of coupling portions 3 is not particularly limited, the number is appropriately set from viewpoints of reducing the weight, improving power transmission, and improving the durability while sufficiently supporting the load from the vehicle.

The plurality of coupling portions 3 is configured such that first coupling portions 31 and second coupling portions 32 are arrayed along the tire circumferential direction CD. In this case, it is preferable that the first coupling portions 31 and the second coupling portions 32 be arrayed alternately with each other along the tire circumferential direction CD. This makes it possible to further reduce dispersion of the ground contact pressure during tire rolling.

From the viewpoint of improving the uniformity, it is preferable that a pitch in the tire circumferential direction CD between the first coupling portions 31 and the second coupling portions 32 be set constant.

Each of the first coupling portions 31 is extended from one side WD1 in the tire width direction of the inner annular portion 1 toward the other side WD2 in the tire width direction of the outer annular portion 2. Meanwhile, each of the second coupling portions 32 is extended from the other side WD2 in the tire width direction of the inner annular portion 1 toward the one side WD1 in the tire width direction of the outer annular portion 2. That is, the first coupling portion 31 and the second coupling portion 32, which are adjacent to each other, are disposed in a substantially X shape when viewed from the tire circumferential direction CD.

The first coupling portion 31 and the second coupling portion 32 when viewed from the tire circumferential direction CD are preferably symmetric to each other with respect to a tire equatorial plane as shown in FIG. 2. Therefore, hereinafter, the first coupling portion 31 will mainly be described.

The first coupling portion 31 has an elongated plate-like shape extending from the inner annular portion 1 to the outer annular portion 2. In the first coupling portion 31, the plate thickness t is smaller than the plate width w, and the plate thickness direction is oriented to the tire circumferential direction CD. That is, the first coupling portion 31 has a plate shape extending in the tire radial direction RD and in the tire width direction WD.

The first coupling portion 31 and the second coupling portion 32 are formed into such an elongated plate shape. In this way, even if the plate thickness t is reduced, the first coupling portion 31 and the second coupling portion 32 can obtain desired rigidity by setting the plate width w to be wide. Therefore, the durability can be improved.

Moreover, the number of first coupling portions 31 and the number of second coupling portions 32 are increased while thinning the plate thickness t. In this way, gaps between the coupling portions adjacent to one another in the tire circumferential direction CD can be reduced while maintaining the rigidity of the entire tire. Therefore, the dispersion of the ground contact pressure during the tire rolling can be reduced.

Although the thickness t is not particularly limited, the thickness t is appropriately set from the viewpoints of reducing the weight and improving the durability while sufficiently transmitting force from the inner annular portions 1 and the outer annular portions 2. Although the plate width W is not particularly limited, the plate width w is appropriately set from the viewpoints of reducing the weight and improving the durability while sufficiently transmitting force from the inner annular portions 1 and the outer annular portions 2.

Preferably, the first coupling portion 31 has reinforcing portions 31a and 31b, in which the plate width gradually increases toward the inner annular portion 1 or the outer annular portion 2, in a vicinity of a connecting portion with the inner annular portion 1 and in a vicinity of a connecting portion with the outer annular portion 2.

The first coupling portion 31 includes an inner connecting portion 31c connected to the inner annular portion 1 and an outer connecting portion 31d connected to the outer annular portion 2. The inner connecting portion 31c is a portion where the reinforcing portion 31a is connected to the inner annular portion 1. Moreover, the outer connecting portion 31d is a portion where the reinforcing portion 31b is connected to the outer annular portion 2.

Although the shape of the inner connecting portion 31c is not particularly limited, the inner connecting portion 31c is formed to be elongated in this embodiment. Specifically, the inner connecting portion 31c is formed into a rectangular shape. The longitudinal direction of the inner connecting portion 31c is parallel to the tire width direction WD. Note that the longitudinal direction of the inner connecting portion 31c does not have to be parallel to the tire width direction WD, and for example, may intersect the tire width direction WD.

Although the shape of the outer connecting portion 31d is not particularly limited, the outer connecting portion 31d is formed to be elongated in this embodiment. Specifically, the outer connecting portion 31d is formed into a rectangular shape. The longitudinal direction of the outer connecting portion 31d is parallel to the tire width direction WD. Note that the longitudinal direction of the outer connecting portion 31d does not have to be parallel to the tire width direction WD, and for example, may intersect the tire width direction WD.

The outer annular portion 2 includes: connecting regions 2b and 2d to which the plurality of coupling portions 31 and 32 are connected in a tire width direction WD; and non-connecting regions 2a, 2c and 2e to which the plurality of coupling portions 31 and 32 are not connected in the tire width direction WD. Each of the connecting regions 2b and 2d and the non-connecting regions 2a, 2c and 2e has an annular shape.

The outer connecting portion 31d of the first coupling portion 31 is present only in the connecting region 2b, and the outer connecting portion 32d of the second coupling portion 32 is present only in the connecting region 2d. The outer connecting portion 31d and the outer connecting portion 32d are not present in the non-connecting regions 2a, 2c and 2e.

When viewed from the tire circumferential direction CD, the partial reinforcing layers 51 and 52 overlap, in the tire radial direction, the respective outer connecting portions 31d and 32d of the plurality of coupling portions 31 and 32 and the outer annular portion 2. With this configuration, the connecting regions 2b and 2d in which the respective outer connecting portions 31d and 32d are present are reinforced by the partial reinforcing layers 51 and 52, whereby the ground contact pressure at the outer connecting portions 31d and 32d can be reduced, and the ground contact pressure in the ground-contacting surface can be suppressed from becoming non-uniform.

As a result, steering stability can be improved and irregular wear can be suppressed. Note that, in this specification, "overlapping" includes not only entire overlapping but also partial overlapping.

The partial reinforcing layers 51 and 52 overlap the respective outer connecting portions 31d and 32d by 50 % or more of the width of the respective outer connecting portions 31d and 32d in the tire width direction WD. That is, the overlapping between the partial reinforcing layer 51 and the outer connecting portion 31d is 50 % or more of a width Ws1 of the outer connecting portion 31d in the tire width direction WD, and the overlapping between the partial reinforcing layer 52 and the outer connecting portion 32d is 50 % or more of a width Ws2 of the outer connecting portion 32d in the tire width direction WD.

With this configuration, the connecting regions 2b and 2d in which the respective outer connecting portions 31d and 32d are present can be effectively reinforced by the partial reinforcing layers 51 and 52.

Widths of the partial reinforcing layers 51 and 52 are appropriately set depending on a width and shape of the coupling portion 3 since ranges to be reinforced vary depending on the widths of the outer connecting portions 31d and 32d. Such a width Wa1 of the partial reinforcing layer 51 is, for example, 50 % to 110 % of the width Ws1 of the outer connecting portion 31d. Such a width Wa2 of the partial reinforcing layer 52 is, for example, 50 % to 110 % of the width Ws2 of the outer connecting portion 32d.

Moreover, in the example shown in FIG. 2, both end portions of the partial reinforcing layers 51 and 52 in the tire width direction are located in the connecting regions 2b and 2d; however, the present invention is not limited to this. That is, the end portions of the partial reinforcing layers 51 and 52 in the tire width direction may be located in the non-connecting regions 2a, 2c and 2e.

As described above, the non-pneumatic tire T according to this embodiment includes: the inner annular portion 1; the outer annular portion 2 provided concentrically on the outer side of the inner annular portion 1; the plurality of coupling portions 3, 31, 32 which couple the inner annular portion 1 and the outer annular portion 2 to each other and are provided independently of one another in the tire circumferential direction CD; the at least one annular overall reinforcing layer 4 embedded entirely in the outer annular portion 2 in the tire width direction WD; and the at least one annular partial reinforcing layer 5, 51, 52 embedded only in a part of the outer annular portion 2 in the tire width direction WD, wherein, when viewed from the tire circumferential direction CD, the partial reinforcing layer 5, 51, 52 overlaps, in a tire radial direction RD, each of outer connecting portions 3d, 31 d, 32d where the plurality of coupling portions 3, 31, 32 are connected to the outer annular portion 2.

According to this non-pneumatic tire T, the respective outer connecting portions 3d, 31d, 32d where the plurality of coupling portions 3, 31, 32 are connected to the outer annular portion 2 are reinforced by the partial reinforcing layers 5, 51, 52, whereby the ground contact pressure at the outer connecting portions 3d, 31d, 32d can be reduced, and the ground contact pressure in the ground-contacting surface can be suppressed from becoming non-uniform.

Moreover, in the non-pneumatic tire T according to this embodiment, it is preferable that the partial reinforcing layer 5, 51, 52 overlaps each of the outer connecting portions 3d, 31d, 32d by 50 % or more of the width Ws, Ws1, Ws2 of each of the outer connecting portions 3d, 31d, 32d in the tire width direction WD. With this configuration, the regions in which the respective outer connecting portions 3d, 31d, 32d are present can be effectively reinforced by the partial reinforcing layers 5, 51, 52.

Moreover, in the non-pneumatic tire T according to this embodiment, the partial reinforcing layer 5, 51, 52 may be disposed outside the overall reinforcing layer 4 in the tire radial direction RD. With this configuration, the partial reinforcing layers 5, 51, 52 can be prevented from adversely affecting a reinforcing effect of the overall reinforcing layer 4 for the outer annular portion 2.

Further, in the non-pneumatic tire T according to this embodiment, a plurality of the overall reinforcing layers 4 maybe provided, and the partial reinforcing layer 5, 51, 52 may be disposed between the plurality of the overall reinforcing layers 4. With this configuration, the partial reinforcing layers 5, 51, 52 can be prevented from adversely affecting the reinforcing effect of the overall reinforcing layer 4 for the outer annular portion 2.

Moreover, in the non-pneumatic tire T according to this embodiment, the partial reinforcing layer 5, 51, 52 may be composed of reinforcing fibers, and the reinforcing fibers may be arrayed in a direction inclined by 0° to 45° with respect to the tire circumferential direction CD. With this configuration, the reinforcing effect of the partial reinforcing layers 5, 51, 52 can be enhanced.

### Other Embodiments

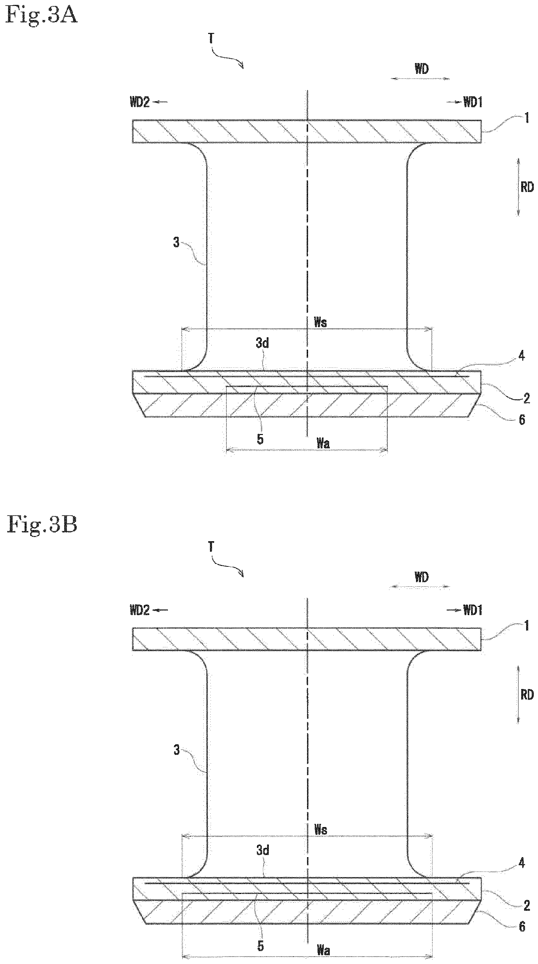

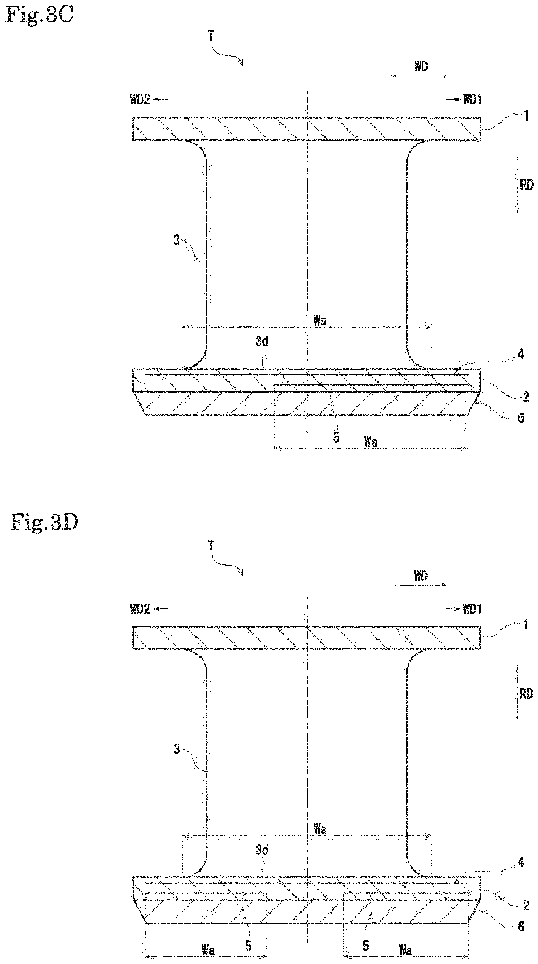

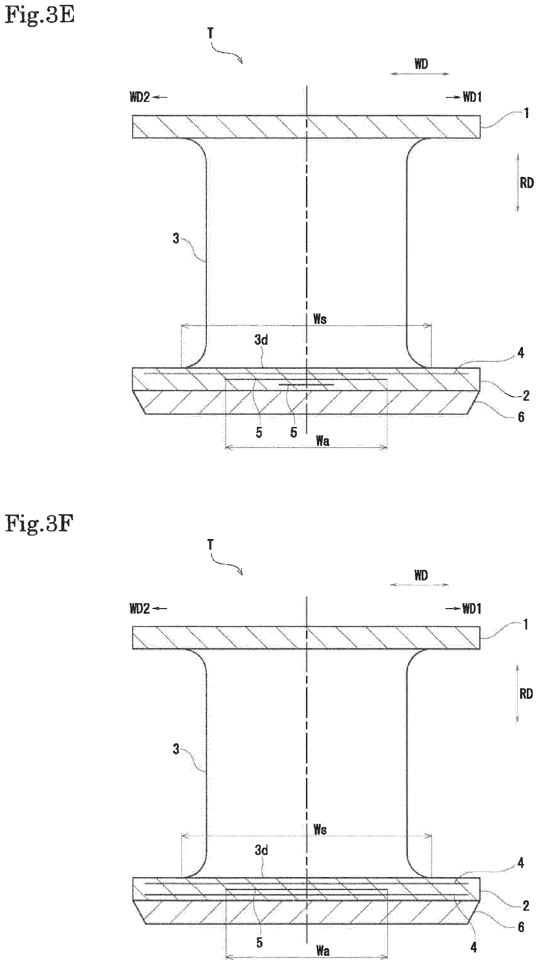

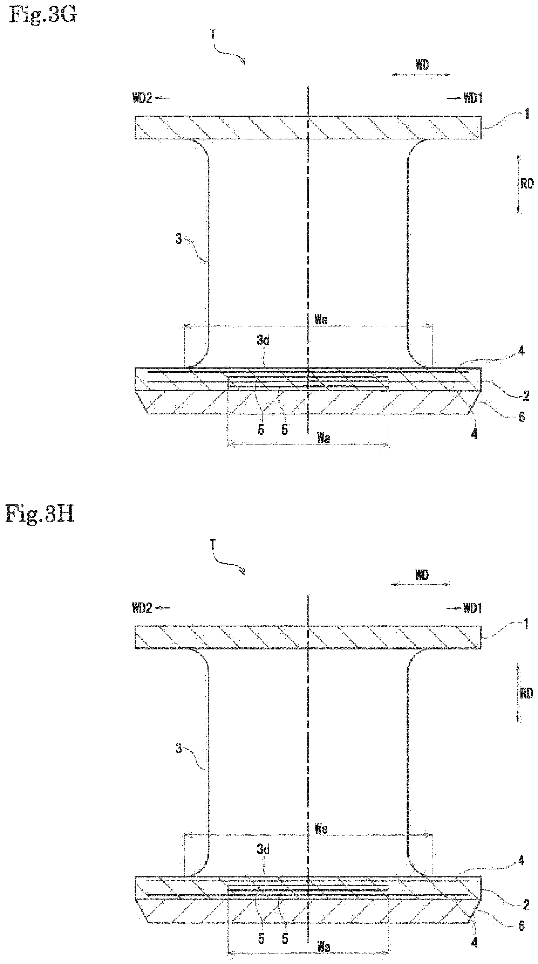

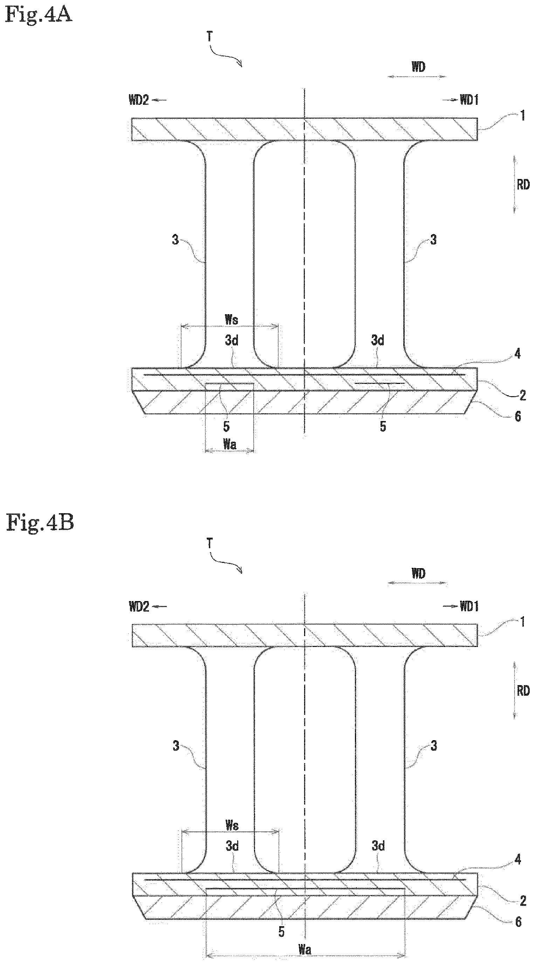

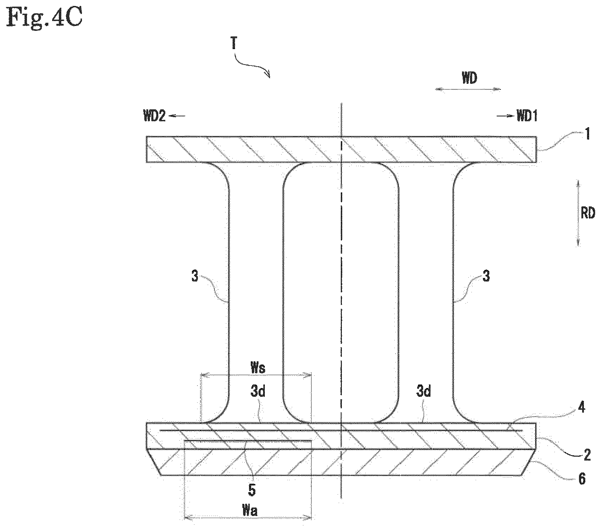

In the above-mentioned embodiment, though the first coupling portion 31 and the second coupling portion 32 are shown as the coupling portions 3, the shape and disposition of the coupling portion 3 are not limited to this. Furthermore, the shape and disposition of the partial reinforcing layers 5 are not particularly limited, either.
(1) In the example shown in FIG. 3A, the coupling portion 3 has a substantially rectangular plate shape. The coupling portion 3 couples a central portion of the inner annular portion 1 in the tire width direction WD and a central portion of the outer annular portion 2 in the tire width direction WD. The partial reinforcing layer 5 overlaps each outer connecting portion 3d in the tire radial direction RD when viewed from the tire circumferential direction CD.
(2) In the example shown in FIG. 3B, the width Wa of the partial reinforcing layer 5 is approximately 100 % of the width Ws of the outer connecting portion 3d.
(3) In the example shown in FIG. 3C, the partial reinforcing layer 5 is disposed to be biased to one side WD1 in the tire width direction.
(4) In the example shown in FIG. 3D, two partial reinforcing layers 5 and 5 are provided side by side in the tire width direction WD.
(5) In the example shown in FIG. 3E, the partial reinforcing layers 5 are provided to overlap each other in the tire radial direction RD. A width of the partial reinforcing layer 5 outside in the tire radial direction RD between two partial reinforcing layers 5 and 5 is smaller than a width of the partial reinforcing layer 5 inside in the tire radial direction RD.
(6) In the example shown in FIG. 3F, two overall reinforcing layers 4 are provided. When a plurality of the overall reinforcing layers 4 are provided, preferably, the partial reinforcing layer 5 is disposed outside the overall reinforcing layer 4 as an innermost layer in the tire radial direction RD, and is disposed inside the overall reinforcing layer 4 as an outermost layer in the tire radial direction RD. That is, the partial reinforcing layer 5 is preferably disposed between the plurality of overall reinforcing layers 4.
(7) In the example shown in FIG. 3G, two overall reinforcing layers 4 and two partial reinforcing layers 5 are disposed to be alternately stacked on one another.
(8) In the example shown in FIG. 3H, two partial reinforcing layers 5 are disposed between two overall reinforcing layers 4.
(9) In the example shown in FIG. 4A, two substantially rectangular plate-shaped coupling portions 3 and 3 are provided side by side in the tire width direction WD. Further, two partial reinforcing layers 5 and 5 are provided side by side in the tire width direction WD. In this example, the partial reinforcing layers 5 overlap the respective outer connecting portions 3d in the tire radial direction RD when viewed from the tire circumferential direction CD.
(10) In the example shown in FIG. 4B, the outer connecting portions 3d and 3d of two coupling portions 3 and 3 are reinforced by one partial reinforcing layer 5.
(11) In the example shown in FIG. 4C, only the outer connecting portion 3d of the coupling portion 3 on the other side WD2 in the tire width direction of two coupling portions 3 and 3 is reinforced by the partial reinforcing layer 5.

Although the embodiments of the present invention have been described above with reference to the drawings, it should be considered that the specific configurations are not limited to these embodiments. The scope of the present invention is shown not only by the above description of the embodiments but also by the claims, and further includes all modifications within the meanings and the scope, which are equivalent to those in the claims.

## Claims

1. A non-pneumatic tire (T) comprising:
- an inner annular portion (1);
- an outer annular portion (2) provided concentrically on an outer side of the inner annular portion (1);
- a plurality of coupling portions (3, 31, 32) which couple the inner annular portion (1) and the outer annular portion (2) to each other and are provided independently of one another in a tire circumferential direction (CD);
- at least one annular overall reinforcing layer (4) embedded entirely in the outer annular portion (2) in a tire width direction (WD); and
- at least one annular partial reinforcing layer (5, 51, 52) embedded only in a part of the outer annular portion (2) in the tire width direction (WD),
- wherein, when viewed from the tire circumferential direction (CD), the partial reinforcing layer (5, 51, 52) overlaps, in a tire radial direction (RD), each of outer connecting portions (3d, 31d, 32d) where the plurality of coupling portions (3, 31, 32) are connected to the outer annular portion (2).

2. The non-pneumatic tire (T) according to claim 1,
wherein the partial reinforcing layer (5, 51, 52) overlaps each of the outer connecting portions (3d, 31d, 32d) by 50 % or more of the width (Ws, Ws1, Ws2) of each of the outer connecting portions (3d, 31d, 32d) in the tire width direction (WD).

3. The non-pneumatic tire (T) according to claim 1 or 2,
wherein the partial reinforcing layer (5, 51, 52) is disposed outside the overall reinforcing layer (4) in the tire radial direction (RD).

4. The non-pneumatic tire (T) according to claim 1 or 2,
wherein a plurality of the overall reinforcing layers (4) are provided, and the partial reinforcing layer (5, 51, 52) is disposed between the plurality of the overall reinforcing layers (4).

5. The non-pneumatic tire (T) according to one of claims 1 to 4,
wherein the partial reinforcing layer (5, 51, 52) is composed of reinforcing fibers, and the reinforcing fibers are arrayed in a direction inclined by 0° to 45° with respect to the tire circumferential direction (CD).

6. The non-pneumatic tire (T) according to one of claims 1 to 5,
wherein the width (Wa, Wa1, Wa2) of the partial reinforcing layer (5, 51, 52) in the tire width direction (WD) is 50 % to 110 % of the width (Ws, Ws1, Ws2) of the outer connecting portion (3d, 31d, 32d) in the tire width direction.
